# EUROPÄISCHE PATENTSCHRIFT

(11) **EP 0 974 776 B1**
(45) Veröffentlichungstag und Bekanntmachung des Hinweises auf die Patenterteilung: **03.09.2003**
(21) Anmeldenummer: 99111462.0
(22) Anmeldetag: 12.06.1999
(51) Int. Cl.: F16H 61/22, E05B 17/00

(54) **Sperrelement**
Locking member
Elément de blocage

(30) Priorität: 22.07.1998 DE 19832868
(43) Veröffentlichungstag der Anmeldung: 26.01.2000
(73) Patentinhaber: Dr.Ing. h.c.F. Porsche Aktiengesellschaft, 70435 Stuttgart (DE)
(72) Erfinder: Sander, Edmund, 71229 Leonberg (DE)

(56) Entgegenhaltungen:
- DE-A- 2 320 351
- DE-C- 19 641 706
- US-A- 4 756 564
- US-A- 5 303 610

## Beschreibung

Die Erfindung betrifft ein Sperrelement, wie es beispielsweise zur Verriegelung eines Wählhebels in Fahrzeugen einsetzbar ist.

Sperrelemente können vergleichsweise große Bauvolumina aufweisen, wenn die aufzunehmenden und zu übertragenden Sperrkräfte eine gewisse Größe erreichen. So treten beispielsweise bei einem Sperrelement, das in Verbindung mit einem Wählhebel in einem Fahrzeug verwendet wird, bei einer am Hebel zu sperrenden Kraft von 300 N Sperrkräfte in der Größe von 1500 N auf.

Zur Übertragung solch hoher Sperrkräfte muß der Materialquerschnitt des Sperrelementes vergrößert werden. Hiermit ist der Nachteil verbunden, daß ein solches Sperrelement nur schwer zu fertigen ist; z.B. ist eine Herstellung eines derartigen Sperrelementes durch Ausstanzen nur bis zu einer gewissen Blechdicke wirtschaftlich möglich. Zudem ist hier Nacharbeit notwenig, da das Stanzen dicker Teile nicht mit derselben Präzision wie das Stanzen dünner Teile durchgeführt werden kann. Ein solches mehrlagiges Sperrelement ist bereits aus einer Keylock-Einrichtung bekannt geworden, die in Fahrzeugen des Typs Porsche 964 Tiptronic eingesetzt wurde.

Wenn das Sperrelement aus Metall gefertigt ist, stellt sich darüber hinaus das Problem, daß beim Auftreffen des Sperrelementes auf weitere Sperrenbauteile wie eine Sperrklinke, einen Anschlag oder ähnliches Geräusche erzeugt werden.

Aus der DE 196 41 706 C1 ist eine Anordnung zum Sperren einer Wähleinrichtung bekannt, bei welcher das Fahrzeug auch nach einem Stromausfall im Gesamtsystem abstellbar ist. Hierbei werden die der R-Stellung zugehörigen Sperrnocken eines Handwählorgans durch Federkraft außer Eingriff gehalten, so daß die Wähleinrichtung nach einem Stromausfall in die P-Stellung betätigt und somit das Fahrzeug gesichert abgestellt werden kann. Diese Anordnung ist komplex und benötigt zusätzlich die Auswertung verschiedener Fahrzeugparameter, um dann mittels eines Hubmagnetes die Feder zu spannen.

Demgegenüber ist es Aufgabe der Erfindung, ein Sperrelement zu schaffen, das zur Aufnahme hoher Kräfte geeignet ist, mit geringem Bauaufwand herstellbar ist und in Verbindung mit weiteren Sperrenbauteilen eine verminderte Geräuschentwicklung aufweist.

Diese Aufgabe wird vorrichtungstechnisch durch die Merkmale des Anspruches 1 gelöst. Erfindungsgemäß wird zur vorrichtungstechnischen Lösung dieser Aufgabe vorgeschlagen, das Sperrelement bestehend aus zumindest zwei flächigen Elementen auszuführen. Hierbei ist das erste Element zumindest bereichsweise mit elastischem Material umspritzt und die anderen Elemente sind mit dem ersten Element über das elastische Material gekoppelt. Dadurch, daß das Sperrelement aus mehreren flächigen Elementen zusammengesetzt ist, ist der Bauaufwand vermindert, denn hierbei sind die einzelnen flächigen Elemente dünner und daher deutlich einfacher zu fertigen. Außerdem kann ein derartiges Sperrelement besonders einfach an die auftretenden Sperrkräfte angepasst werden, indem die Anzahl der flächigen Elemente, aus denen das Sperrelement zusammengesetzt ist, variiert wird. Durch das Umspritzen eines ersten flächigen Elementes mit elastischem Material liegen die einzelnen flächigen Elemente nicht unmittelbar aneinander, sondern sind durch das elastische Material entkoppelt. Die Verbindung der anderen flächigen Elemente mit dem ersten flächigen Element erfolgt mit Hilfe des elastischen Materiales, so daß keine zusätzlichen Verbindungsmittel erforderlich sind. Das elastische Material bewirkt sowohl durch Dämpfung des Aufschlages beim Zusammentreffen mit weiteren Sperrenbauteilen wie auch durch die Entkoppelung der einzelnen flächigen Elemente eine deutliche Geräuschminderung. Darüber hinaus hat die elastische Koppelung der flächigen Elemente weiterhin den Vorteil, daß sich die einzelnen flächigen Elemente zueinander so ausrichten können, daß die Sperrkraft verteilt über alle flächigen Elemente und damit ohne Kraftspitzen aufgenommen wird. Die flächigen Elemente sind somit selbst ausrichtend. Hierbei muß das erste Element nicht flächig umspritzt werden, sondern es reicht vielmehr aus, wenn dies bereichsweise erfolgt: soweit erforderlich an den Anschlagflächen und darüber hinaus in vorgegebenen Bereichen, die zur Ankoppelung der anderen flächigen Elemente dienen sollen.

So wird vorgeschlagen, daß das als Koppelungselement verwendete elastische Material die anderen Elemente durchdringt. Bei dieser Art der Koppelung der flächigen Elemente untereinander muß nur das erste flächige Element umspritzt werden, während die anderen Elemente durch das elastische Material mit dem ersten flächigen Element gekoppelt sind. Diese Koppelung kann beispielsweise durch Formschluß (Hinterschneidung, Verrasten etc.) oder durch Verpressen des elastischen Materiales erfolgen.

Ergänzend wird vorgeschlagen, Mittel zur Begrenzung der elastischen Verformung vorzusehen. Da sich elastisches Material auf das erste flächige Element nur mit einer materialabhängigen Mindestschichtdicke aufbringen läßt, entsteht bei hohen Belastungen durch die Dicke des elastischen Materiales ein unzulässig hoher Verformungsweg zwischen den einzelnen flächigen Elementen. Es wird vorgeschlagen, Mittel zur Begrenzung der elastischen Verformung vorzusehen, die an einem oder allen flächigen Elementen angebracht sein können.

Vorteilhafte Weiterbildungen des Sperrelementes sind in den Unteransprüchen beschrieben.

Die Anschlagflächen des Sperrelelementes dienen zusammen mit den weiteren Sperrenbauteilen zum Sperren des Sperrelementes. Hinsichtlich der Anschlagflächen wird vorgeschlagen, einen Teil der Anschlagflächen nicht zu umspritzen. Dies gilt insbesondere für Anschlagflächen, die mit den weiteren Sperrenbauteilen wie Sperrklinken zusammenwirken. Hier ist es zur Aufnahme auch hoher Sperrkräfte unter Umständen nicht erwünscht, daß zwischen den die Sperrkraft übertragenden Flächen ein elastisches Material aufgebracht ist. Darüber hinaus kann das beim Auftreffen einer metallischen Sperrklinke auf die metallische Sperrfläche entstehende Geräusch verwendet werden, um ein Eingreifen der Sperrklinke akustisch anzuzeigen.

Eine weitere Ausbildung der Anschlagflächen sieht vor, daß das erste, mit elastischem Material umspritzte flächige Element im Bereich der Anschlagfläche eine Ausnehmung aufweist, die gegenüber denanderen flächigen Elementen im Bereich dieser Anschlagfläche zurückversetzt ist. Das erste flächige Element ist im Bereich der Anschlagfläche so mit elastischem Material umspritzt, daß das elastische Material über die Anschlagfläche an den anderen Elementen hinausragt. Bei dieser Ausbildung ist am umspritzten flächigen Element ein elastischer Anschlag gebildet, der über die an den anderen flächigen Elementen gebildete Anschlagfläche hinausragt. Ein eingreifendes Sperrenbauteil trifft somit zunächst auf diesen elastischen Anschlag, und der Aufprall des Sperrenbauteiles ist gedämpft. Sind die hierbei wirkenden Kräfte groß genug, so wird der elastische Anschlag so weit verformt, bis das Sperrenbauteil an der an den anderen flächigen Elementen gebildete Anschlagfläche anliegt. Eine weitere Verformung des elastischen Anschlages ist nun nicht mehr möglich; andererseits ist eine Zerstörung des elastischen Anschlages nicht möglich, da die im umspritzten flächigen Elelement vorgesehene Aussparung genügend Raum zur Aufnahme des verformten elastischen Anschlages bietet, ohne daß dieser unzulässig verformt wird.

Die vom elastischen Material umspritzten Anschlagflächen sind, da nur das erste Elemente mit elastischem Material umspritzt ist, nur in dem Bereich wirksam, in dem auch elastisches Material aufgetragen ist. Erst wenn die auf die Anschlagsfläche wirkende Kraft so groß ist, daß das elastische Material verdrängt wird, tragen neben dem ersten Element auch die anderen Elemente mit und nehmen die Sperrkraft auf.

Die Erfindung ist nachstehend anhand des in den Figuren dargestellten Ausführungsbeispieles näher erläutert. Es zeigen:
- Fig. 1: Eine Ansicht eines erfindungsgemäßen Sperrelementes in der Position P,
- Fig. 2: eine Ansicht eines erfindungsgemäßen Sperrelementes in der Position N,
- Fig. 3: einen Schnitt nach der Linie III-III der Fig. 2,
- Fig. 4: in einem Schnitt nach der Linie IV-IV der Fig. 2 eine erste Ausbildung einer Anschlagfläche an dem Sperrelement,
- Fig. 5: eine zweite Ausbildung der Anschlagfläche an dem Sperrelement,
- Fig. 6: eine dritte Ausbildung der Anschlagfläche an dem Sperrelement und
- Fig. 7: ein Ablaufdiagramm eines Verfahrens zur Herstellung eines Sperrelementes.

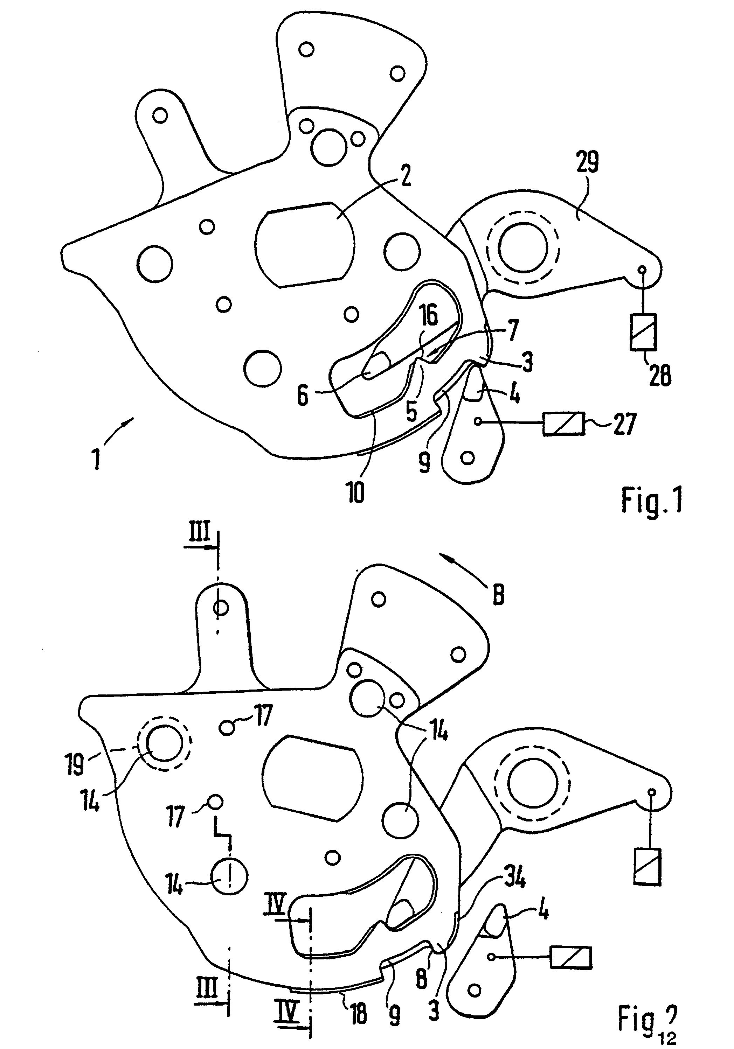

Das in Fig. 1 dargestellte Sperrelement ist innerhalb eines nicht dargestellten Gehäuses eines Wählhebels zur Bedienung eines Kraftfahrzeug-Automatgetriebes angeordnet. Durch eine zentrale Ausnehmung 2 ist das Sperrelement 1 mit dem nicht gezeigten Wählhebel drehfest verbunden. Am Rand des Sperrelementes 1 ist ein erster Anschlag 3 angebracht, die mit einer gehäusefest angeordneten Klinke 4 zusammenwirkt. Im Inneren des Sperrelementes 1 befindet sich in einer Ausnehmung ein zweiter Anschlag 5, die mit einer am Gehäuse befestigten Sperrklinke 6 im Bereich einer Anschlagsfläche 7 zusammenwirkt. Während der erste Anschlag 3 vollständig von einer ersten Schicht 9 aus elastischem Material gebildet ist, weist eine zweite Schicht 10 aus elastischem Material, die am zweiten Anschlag 5 angebracht ist, im Bereich der Anschlagfläche 7 eine Unterbrechung 16 auf.

Die Klinke 4 ist von einem ersten Elektromagneten 27 betätigt; im unbestromten Zustand des Elektromagneten 27 befindet sich die Klinke 4 in der in Fig. 1 dargestellten Eingriffsposition. Zur Betätigung der Sperrklinke 6 ist ein zweiter Elektromagnet 28 vorgesehen, wobei die Sperrklinke 6 im unbestromten Zustand des zweiten Elektromagneten 28 die in Fig. 1 dargestellten Ruheposition einnimmt. Die Klinke 4 und die Sperrklinke 6 müssen nicht notwenigerweise als getrennte Bauteile ausgeführt sein; so ist es gleichfalls möglich, die Klinke 4 auf einem Träger 29 der Sperrklinke 6 mit anzuordnen.

Fig. 1 zeigt das Sperrelement 1 in der Position P des Wählhebels. Aus Sicherheitsgründen soll der Wählhebel aus dieser (End-) Position heraus nur dann bewegt werden können, wenn eine Betriebsbremse des Fahrzeuges betätigt ist. In der dargestellten Eingriffsposition sperrt die Klinke 4 das Sperrelement 1 und damit den Wählhebel, in dem über die Klinke 4 der Anschlag 3 des Sperrelementes 1 am Gehäuse abgestützt ist. Zur Entriegelung der Klinke 4 und damit des Sperrelementes 1 muß der Elektromagnet 27 bestromt werden. Dies geschieht im vorliegenden Fall dadurch, daß der Elektromagnet 27 mit einem nicht gezeigten Bremslichtkontakt verbunden ist und somit dann bestromt wird, wenn die Betriebsbremse des Fahrzeuges betätigt ist.

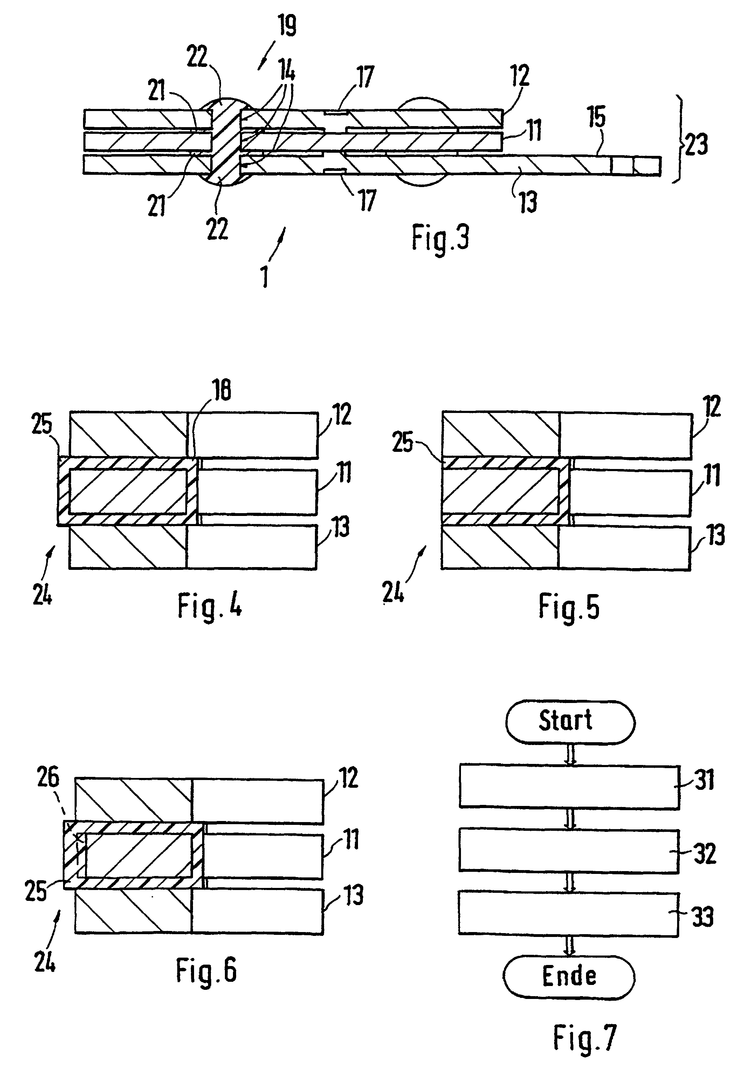

Fig. 2 zeigt im Unterschied zu Fig. 1 das Sperrelement 1 in der Position N des Wählhebels. Gemäß einer weiteren Sicherheitsfunktion soll verhindert werden, daß der Wählhebel aus der Stellung N (= Leerlauf) heraus in die Position R (= Rückwärtsgangs) bewegt wird, solange das Fahrzeug in Bewegung ist. Zur Realisierung dieser Funktion wird der zweite Elektromagnet 28 bestromt, wenn ein Geschwindigkeitswert größer als 3 km/h vorliegt. In diesem Fall befindet sich die Sperrklinke 6 in ihrer in Fig. 2 dargestellten Eingriffsposition und verhindert zusammen mit dem zweiten Anschlag 5 eine Bewegung des Sperrelementes 1 in Pfeilrichtung B über die dargestellte Position hinaus.

Wie in Fig. 3 besser zu erkennen ist besteht das Sperrelement 1 aus mehreren flächigen Elementen, hier drei Scheiben 11 bis 13. Die drei Scheiben 11 bis 13 weisen einheitlich die Anschläge 3 und 5, die zentrale Ausnehmung 2 (siehe Fig. 1) sowie Bohrungen 14 auf. Die untere Scheibe 13 ist zusätzlich mit einem Ansatz 15 versehen.

Die äußeren Scheiben 12 und 13 weisen als zusätzliches Merkmal gegenüber der mittleren Scheibe 11 Prägepunkte 17 auf, die in Richtung der mittleren Scheibe 11 eingebracht wurden. Alternativ ist es auch möglich, ähnliche Prägepunkte an der mittleren Scheibe 11 anzuformen.

Im Unterschied zu den äußeren Scheiben 12, 13 weist die mittlere Scheibe 11 eine Umspritzungen 18 aus elastischem Material auf, die die elastischen Schichten 9 und 10 bildet und sich sich zwischen den Anschlägen 3 und 5 erstreckt. Demgegenüber ist eine zweite Umspritzung 19 (in Fig. 2 nur einmal strichliert angedeutet, sonst vgl. Fig. 3), die über das Sperrelement 1 jeweils in den Bohrungen 14 vorgesehen ist und über alle drei Scheiben 11 bis 13 erstreckt, im wesentlichen aus einem zentralen Stab 20, an dem rechts und links der mittleren Scheibe 11 Pufferelemente 21 ausgebildet sind. Der Stab 20 erstreckt sich durch die Bohrungen 14 der äußeren Scheiben 12 und 13 hindurch und ist an diesen außenseits zu einem Kopf 22 ähnlich einem Nietkopf durch Erwärmen verpresst. Die Scheiben 11 bis 13 sind damit unter Zwischenschaltung der Pufferelemente 21 durch den Stab 20 und die Köpfe 22 zu einem Scheibenpaket 23 verbunden.

Sowohl die erste Umspritzung 18 wie auch die Puffer 21 sorgen für die Beabstandung der äußeren Scheiben 12 und 13 von der mittleren Scheibe 11 unter Zwischenschaltung des zur Herstellung der Umspritzungen 18, 19 verwendeten elastischen Materiales. Die Scheiben 11 bis 13 sind somit jeweils gegeneinander entkoppelt. Außerdem sind die Bewegungsmöglichkeiten der Scheiben 11 bis 13 zueinander durch die Verprägungen 17 begrenzt.

Da die Klinke 4 am ersten Anschlag 3 stets auf die erste Schicht 9 trifft, ist das elastische Material auch beim Auftreffen der Klinke 4 auf eine Anschlagfläche 8 wirksam und unterdrückt eine mögliche Geräuschentwicklung. Die am ersten Anschlag 3 auftretenden Kräfte werden, weil die erste Schicht 9 durch die erste Umspritzung 18 nur mit der mittleren Scheibe 11 verbunden ist, zunächst nur von der mittleren Scheibe 11 übertragen. Erst wenn die zu übertragenden Kräfte so groß werden, daß das die erste Schicht 9 im Bereich der Anschlagfläche 8 verdrängt wird, tragen auch die äußeren Scheiben 12 und 13 mit.

Etwas anderes gilt für die Sperrklinke 6, die an der zweiten Anschlagfläche 7 anliegt. An der zweiten Anschlagfläche 7 ist im Bereich der Unterbrechung 16 kein elastisches Material vorhanden; hierzu wurde die zweite Anschlagfläche 7 gar nicht umspritzt oder das elastische Material wurde in diesem Bereich wieder entfernt. Die zweite Anschlagfläche 7 steht somit in direktem Kontakt mit der Sperrklinke 6. Dies führt zu einer gedämpften, dennoch aber hörbaren Geräuschentwicklung beim Auftreffen der Sperrklinke 6 auf die Anschlagfläche 7. Außerdem tragen im Bereich der Anschlagfläche 7 immer alle drei Scheiben 11 bis 13 zur Kraftübertragung bei.

Die möglichen Ausbildungen einer Anschlagfläche 24 sind in den Figuren 4 bis 6 am Beispiel einer Schnittdarstellung nach der Linie IV-IV der Fig. 2 gezeigt. Die Ausbildung der Anschlagfläche 24 nach Fig. 4 entspricht der Anschlagfläche 8. Die mittlere Scheibe 11 ist im Bereich der Anschlagfläche 24 vollständig mit einer Umspritzung 25 aus elastischem Material versehen. Bei dieser Ausbildung wirkt die Umspritzung 25 als alleiniger elastischer Anschlag für ein Sperrelement. Eine Mitwirkung der äußeren Scheiben 12 und 13 ist nur für den Mißbrauchsfall vorgesehen, in dem die einwirkenden Kräfte die Umspritzung 25 zerstören.

Die Ausbildung der Anschlagfläche 24 nach Fig. 5 entspricht der Anschlagfläche 7. Hier ist die Umspritzung 25 nur zwischen der mittleren Scheibe 11 und den äußeren Scheiben 12 und 13 vorgesehen; ein flächenbündiger Abschluß der Umspritzung 25 mit den Scheiben 11 bis 13 ist nicht notwendig. Ein Sperrelement, das mit der Anschlagfläche 24 zusammentrifft, steht somit immer in Kontakt mit allen drei Scheiben 11 bis 13. Aufgrund der elastischen Kopplung der Scheiben 11 bis 13 durch Umspritzung 25 sind diese in der Lage, Toleranzen und Schiefstellungen in bezug auf das Sperrelement auszugleichen, so daß alle drei Scheiben 11 bis 13 gleichmäßig zu Kraftübertragung beitragen.

Die dritte Ausbildung der Anschlagfläche 24 nach Fig. 6 entspricht der Ausbildung nach Fig. 3, wobei die mittlere Scheibe 11 im Bereich der Anschlagfläche 24 eine Ausnehmung 26 aufweist. Die Ausnehmung 26 ist von der Umspritzung 25 ausgefüllt. Beim Eingriff eines Sperrelementes wirkt zunächst die elastische Umspritzung 25 als elastischer Anschlag. Nehmen die zwischen Sperrelement und Anschlagfläche 24 wirkenden Kräfte zu, so wird die Umspritzung 25 soweit verformt, bis das Sperrelement an den äußeren Scheiben 12, 13 anliegt. Die Ausnehmung 26 sorgt hierbei dafür, daß sich die Umspritzung 25 auch im Bereich der mittleren Scheibe 11 elastisch verformen kann, ohne hierbei zerstört zu werden. Bei dieser Ausbildung dient die Umspritzung 25 als elastischer Anschlag für den Aufprall des Sperrelementes; für die Übertragung der Sperrkräfte wird die Umspritzung 25 ausnehmungsgemäß soweit verformt, daß die äußeren Scheiben 12 und 13 am Sperrelement anliegen.

Auf der Rückseite des Anschlages 3 ist eine weitere elastisch umspritzte Anschlagfläche 34 vorgesehen. Diese Anschlagfläche dient als geräuschgedämpfter Anschlag für die Klinke 4, wenn die Klinke 4 in einer Stellung des Sperrelementes 1 außerhalb der (End-)Position P nach Fig. 1 in Ihre Ausgangsposition zurückfällt.

Im ersten Schritt 31 wird die mittlere Scheibe mit den Umspritzungen 18 und 19 versehen. Im zweiten Schritt 32 werden die äußeren Scheiben 12, 13 auf die mittlere Scheibe 11 aufgesetzt, indem die Stäbe 20 durch die Bohrungen 14 der äußeren Scheiben 12 und 13 hindurchgesteckt werden. Im dritten und letzten Schritt 33 werden die Stäbe 20 endseits unter Erwärmung verpresst und damit die Scheiben 11 bis 13 zum Scheibenpaket 23 verbunden.

## Patentansprüche

1. Sperrelement zur Verriegelung eines Wählhebels, insbesondere in Kraftfahrzeugen, wobei das Sperrelement mit dem Wählhebel gekoppelt ist und mit einer an einem Gehäuse des Wählhebels gehaltenen Sperrklinke (4, 6) zusammenwirkt, wobei das Sperrelement aus zumindest drei einzelnen flächigen Metallelementen (11-13), vorzugsweise Scheiben, zusammengesetzt ist, wobei ein erstes der flächigen Metallelemente zumindest bereichsweise mit elastischem Material umspritzt ist und die weiteren flächigen Metallelemente mit dem (12,13) ersten umspritzten Element (11) über das elastische Material gekoppelt sind, ohne unmittelbar aneinander zu liegen, und daß an den flächigen Metallelementen Anschlagflächen (7,8,24) gebildet sind, an denen die am Gehäuse des Wählhebels gehaltene Sperrklinke sperrend angreift, wobei das elastische Material im Bereich einer dieser Anschlagflächen über die Anschlagflächen an anderen flächigen Metatlelementen hinausragt.

2. Sperrelement nach Anspruch 1, **dadurch gekennzeichnet, daß** wenigstens eine der Anschlagflächen (24) dadurch gebildet ist, daß das erste flächige Metallelement (11) im Bereich dieser Anschlagflächen eine Ausnehmung (26) aufweist, die mit elastischem Material (25) ausgefüllt ist, und wobei die anderen Metallelemente im Bereich dieser einen Anschlagfläche nicht umspritzt sind und das elastische Material über die Anschlagflächen an den anderen Elementen hinausragt.

3. Sperrelement nach Anspruch 1 oder 2, **dadurch gekennzeichnet, daß** in den flächigen Metallelementen überstehende Prägepunkte zur Begrenzung der elastischen Verformung des elastischen Materials senkrecht zu den Elementen der Flächen vorgesehen sind.

## Claims

1. A locking member for locking a selector lever, in particular in motor vehicles, wherein the locking member is coupled to the selector lever and co-operates with a locking pawl (4, 6) held on a housing of the selector lever, wherein the locking member is formed from at least three individual flat metallic members (11 to 13), preferably discs, wherein a first one of the flat metallic members has resilient material injection-moulded around it at least in part and the further flat metallic members (12, 13) are coupled by way of the resilient material to the first member (11) around which the injection-moulding has taken place, without resting directly against one another, and stop faces (7, 8, 24), on which the locking pawl held on the housing of the selector lever engages in a locking manner, are formed on the flat metallic members, wherein the resilient material in the region of one of the said stop faces projects beyond the stop faces on other flat metallic members.

2. A locking member according to Claim 1, **characterized in that** at least one of the stop faces (24) is formed in such a way that the first flat metallic member (11) is provided in the region of the said stop faces with a recess (26) which is filled with resilient material (25), wherein the other metallic members have not had injection-moulding carried out around them in the region of the said one stop face and the resilient material projects beyond the stop faces on the other members.

3. A locking member according to Claim 1 or 2, **characterized in that** projecting impression points are provided in the flat metallic members in order to limit the resilient deformation of the resilient material at a right angle to the members of the faces.

## Revendications

1. Elément de blocage pour verrouiller un levier de sélection, en particulier dans des véhicules automobiles, l'élément de blocage étant couplé au levier de sélection et coopérant avec un cliquet de blocage (4, 6) maintenu sur un boîtier du levier de sélection, l'élément de blocage étant composé d'au moins trois éléments métalliques (11-13) plats individuels, de préférence des disques, un premier des éléments métalliques plats étant enrobé, au moins par endroits, avec une matière élastique, et les autres éléments métalliques (12, 13) plats étant couplés au premier élément (11) enrobé, par la matière élastique, sans s'appliquer directement les uns contre les autres, et en ce que sur les éléments métalliques plats sont formées des surfaces de butée (7, 8, 24) sur lesquelles le cliquet de blocage, maintenu sur le boîtier du levier de sélection, agit par blocage, la matière élastique dépassant, dans la zone de l'une de ces surfaces de butée, des surfaces de butée sur les autres éléments métalliques plats.

2. Elément de blocage selon la revendication 1, **caractérisé en ce qu'**au moins l'une des surfaces de butée (24) est formée de sorte que le premier élément métallique (11) plat présente, dans la zone de ces surfaces de butée, un évidement (26) qui est rempli de matière élastique (25), et les autres éléments métalliques n'étant pas enrobés dans la zone de cette surface de butée, et la matière élastique dépassant des surfaces de butée sur les autres éléments.

3. Elément de blocage selon la revendication 1 ou 2, **caractérisé en ce que** dans les éléments métalliques plats sont prévus des points emboutis saillants, pour limiter la déformation élastique de la matière élastique, perpendiculairement aux éléments des surfaces.
